# EUROPEAN PATENT APPLICATION

(11) **EP 2 196 526 A1**
(43) Date of publication of application: **16.06.2010**
(21) Application number: 09156620.8
(22) Date of filing: 30.03.2009
(51) Int. Cl.: C11C 3/00, C11C 3/08

(54) **Method for Esterification of Free Fatty Acids in Triglycerides**

(30) Priority: 13.11.2008 US 199074 P
(71) Applicant: Rohm and Haas Company, Philadelphia, PA 19106-2399 (US)
(72) Inventor: Banavali, Rajiv Manohar, Rydal PA 19046 (US); Hanlon, Robert Tryon, Philadelphia PA 19107 (US); Schultz, Alfred Karl, Maple Glen PA 19002 (US)
(74) Representative: Kent, Venetia Katherine

(57) **Abstract**

A method for esterification of free fatty acids with methanol. The method has steps of: (a) contacting a heterogeneous esterification catalyst in a reactor with a reaction mixture containing: (i) methanol and (ii) a triglyceride mixture containing 70-99.8 wt % triglycerides and 0.2-30 wt % free fatty acids, under conditions suitable for esterification, to produce a product stream; (b) separating water and methanol from the product stream to produce a dried product stream; (c) contacting the dried product stream with methanol to produce a methanol-rich phase and a triglyceride-rich phase; and (d) separating the methanol-rich phase and recycling it to the reactor.

## Description

### Background

This invention relates generally to a method for esterification of free fatty acids in triglycerides with methanol to produce fatty acid methyl esters.

High fuel prices and environmental concerns are driving development of alternative fuels, especially those derived from renewable resources. One such fuel, commonly known as "biodiesel" fuel, contains alkyl, usually methyl esters of fatty acids, and is burned in diesel engines. Biodiesel fuel is produced from transesterification of triglycerides, such as vegetable oils with alcohols, typically with methanol. However, small amounts of free fatty acids present in triglycerides cause problems in the transesterification process, including foaming in the reaction mixture. It is essential that triglycerides subjected to transesterification contain very low levels of residual free fatty acids, often less than 0.1%. The prior art discloses methods for esterification of free fatty acids in a flow reactor or a multi-stage reactor system, e.g., in DE 19600025. However, the prior art does not teach a method capable of esterifying free fatty acids efficiently to the desired low levels of residual fatty acids.

The problem addressed by this invention is to find an improved method for esterification of free fatty acids in triglycerides with methanol.

### Statement of Invention

The present invention is directed to a method for esterification of free fatty acids in triglycerides with methanol; said method comprising steps of: (a) contacting a heterogeneous esterification catalyst in a reactor with a reaction mixture comprising: (i) methanol and (ii) a triglyceride mixture comprising 70-99.8 wt % triglycerides and 0.2-30 wt % free fatty acids, under conditions suitable for esterification, to produce a product stream; (b) separating water and methanol from the product stream to produce a dried product stream; (c) contacting the dried product stream with methanol to produce a methanol-rich phase and a triglyceride-rich phase; and (d) separating the methanol-rich phase and recycling it to the reactor.

The invention is further directed to a method for esterification of free fatty acids in triglycerides with methanol; said method comprising steps of: (a) contacting a heterogeneous esterification catalyst in a first reactor with a reaction mixture comprising: (i) methanol and (ii) a triglyceride mixture comprising 70-99.8 wt % triglycerides and 0.2-30 wt % free fatty acids, under conditions suitable for esterification, to produce a first product stream; (b) separating water and methanol from the first product stream to produce a dried first product stream; (c) contacting the dried first product stream with a recycled phase from step (f) comprising methanol to produce a first methanol-rich phase and a first triglyceride-rich phase; (d) separating the first methanol-rich phase and recycling it to the first reactor; (e) contacting the first triglyceride-rich phase with a heterogeneous esterification catalyst in a second reactor, under conditions suitable for esterification, to produce a second product stream; and (f) separating the second product stream into a phase comprising methanol and a second triglyceride-rich phase, and recycling the phase comprising methanol to step (c). In some embodiments of the invention, this method further comprises steps of: (g) contacting the second triglyceride-rich phase with methanol to produce a second methanol-rich phase and a final triglyceride phase; and (h) separating the second methanol-rich phase and recycling it to the second reactor.

### Detailed Description

All percentages are weight percentages (wt %), and all temperatures are in °C, unless otherwise indicated. Weight percentages of ion exchange resin are based on dry resin. An "alkyl" group is a saturated hydrocarbyl group having from one to twenty carbon atoms in a linear, branched or cyclic arrangement. In one preferred embodiment, alkyl groups are acyclic. "Triglycerides" used in this invention are fats or oils comprising glycerine triesters of fatty acids. Preferably, triglycerides are in the form of vegetable oils, but animal fats can also be used as a starting material. Fatty acids are acyclic aliphatic carboxylic acids containing from 8 to 22 carbon atoms; typically, they contain from 12 to 22 carbon atoms. With respect to carbon-carbon bonds, the fatty acids may be saturated, monounsaturated or polyunsaturated (typically 2 or 3 carbon-carbon double bonds). Natural fats may also contain small amounts of other esterified, or free fatty acids, as well as small amounts (1-4%) of phospholipids, e.g., lecithin, and very small amounts (<1%) of other compounds, e.g., tocopherols.

Contacting methanol with the dried product stream extracts residual free fatty acid from the dried product stream, thereby decreasing the amount of free fatty acid carrying over into the next esterification or transesterification step. The method also recycles free fatty acid, increasing production of the fatty acid methyl ester. In some embodiments of the invention, the methanol is present in the reaction mixture of step (a) in an amount of at least 1.1 equivalents based on free fatty acid, alternatively at least 2 equivalents, alternatively at least 5 equivalents, alternatively at least 10 equivalents, alternatively at least 15 equivalents. In some embodiments of the invention, the methanol is present in step (a) in an amount of no more than 25 equivalents, alternatively no more than 22 equivalents. In some embodiments of the invention, substantially all of the methanol present in the reaction mixture in step (a) has been recycled in step (d) from extraction of the product stream in step (c), i.e., the methanol to be used as a reactant is first used to extract residual free fatty acid from the product stream. In some embodiments of the invention, at least 70% of the methanol present in step (a) has been recycled from step (d), alternatively at least 80%, alternatively at least 85%, alternatively at least 90%, alternatively at least 95%. The methanol-rich phase is the upper phase and the triglyceride-rich phase is the lower phase. Preferably the methanol-containing liquid used as an extractant in step (c) comprises at least 90% methanol, alternatively at least 95%, alternatively at least 98%, alternatively at least 99%. Preferably, the methanol-containing liquid comprises no more than 0.2% water, alternatively no more than 0.1%, alternatively no more than 0.05%, alternatively no more than 0.03%, alternatively no more than 0.02%. In those embodiments using two reactors and where a second product stream is separated into a phase comprising methanol and a second triglyceride-rich phase, and the methanol phase is recycled and contacted with the dried product stream of the first reactor as an extractant, the liquid used as an extractant also contains free fatty acids, and traces of other species, e.g., fatty acid methyl esters, water and triglycerides. In other embodiments, fresh methanol is contacted with the dried product stream as an extractant.

In some embodiments of the invention, the method further comprises additional steps of: (e) separating water and methanol from the second product stream to produce a dried second product stream; (f) contacting the dried second product stream with methanol to produce a second methanol-rich phase and a second triglyceride-rich phase; and (g) separating the second methanol-rich phase and recycling it to the second reactor.

In some embodiments of the invention, the weight of methanol added as an extractant for the product stream of a reactor in step (c) is from 3% to 50% of the total weight of the dried product stream and methanol, alternatively at least 5%, alternatively at least 10%, alternatively no more than 40%, alternatively no more than 30%, alternatively no more than 25%. The amount of methanol could vary considerably depending on both the level of free fatty acid in the triglyceride and the desired stoichiometric ratio of methanol to free fatty acid, and the amount can be calculated easily from these parameters.

Preferably, continuous reactors are used in the method of this invention, although batch reactors also may be used. Suitable continuous reactors include, e.g., packed-bed reactors, continuous stirred tank reactors, column reactors, etc. Preferably, reactors are configured as co-current flow reactors, i.e., the fatty acid and methanol pass through the reactor in the same direction. In some embodiments of the invention, there is more than one reactor, alternatively more than two, in some cases up to five reactors, with separation of water from product streams between reactors. The method of this invention may be used for some or all of the reactors. Typically, the product stream from the last reactor is sent to a transesterification process, where it is contacted with a transesterification catalyst and an alcohol, preferably after separating water. Preferred alcohols for transesterification are C₁-C₄ alcohols, preferably methanol and ethanol, most preferably methanol.

Separation of water from the product stream is accomplished using any known technology. Examples include, e.g., evaporation at atmospheric or reduced pressure and mechanical separation of a water-rich phase. In some embodiments of the invention, the water level of the product stream is reduced by at least 50%, alternatively at least 60%, alternatively at least 70%, alternatively at least 80%, alternatively at least 90%, alternatively at least 95%, alternatively at least 98%, alternatively at least 99%. In some embodiments in which the triglyceride mixture of step (a) contains a triglyceride and 4-15 wt % of fatty acids, the water level in the product stream is reduced to no more than 0.3 wt %, alternatively no more than 0.2 wt %, alternatively no more than 0.1 wt %, alternatively no more than 0.05 wt %, alternatively no more than 0.02 wt %. In some embodiments of the invention in which the product stream is subjected to transesterification after extraction with methanol, additional methanol may be added to the product stream to provide sufficient excess methanol to facilitate transesterification.

In some embodiments of the invention, the reaction mixture is heated in a temperature range from 40°C to 160°C for at least 15 minutes in contact with the catalyst. Alternatively, the temperature is at least 50°C, alternatively at least 55°C, alternatively at least 60°C, alternatively at least 70°C. Alternatively, the temperature is no greater than 120°C, alternatively no greater than 110°C, alternatively no greater than 90°C, alternatively no greater than 85°C, alternatively no greater than 80°C, alternatively no greater than 75°C. Typically, the reaction is carried out in a flow reactor, and preferably the contact time is at least 30 minutes, alternatively at least 45 minutes. Preferably, the contact time is no more than 6 hours, alternatively no more than 4 hours, alternatively no more than 2 hours. In some embodiments of the invention in which the alcohol is methanol, the reaction is carried out at 70°C to 110°C under pressure, alternatively from 75°C to 100°C. Contact time is defined herein as the length of the reactor divided by the linear flow velocity in the reactor.

In some embodiments of the invention, the triglyceride mixture of step (a) contains 75% to 99.5% triglycerides and 0.5% to 25% free fatty acids. In some embodiments of the invention, this mixture contains 80% to 99.5% triglyceride and from 0.5% to 20% free (unesterified) fatty acids. In some embodiments of the invention, the mixture contains a triglyceride and no more than 15% free fatty acids, alternatively no more than 12%, alternatively no more than 10%. In some embodiments, the mixture contains a triglyceride and at least 0.5% free fatty acids, alternatively at least 1% free fatty acids, alternatively at least 2%, alternatively at least 3%, alternatively at least 4%, alternatively at least 5%. Free fatty acid contents in the feed to subsequent reactors will of course be much lower than those in the feed to the first reactor due to conversion of most of the free fatty acid to the ester in the first reactor. In some embodiments of the invention, the triglyceride mixture fed to the second reactor comprises from 0.08% to 3% free fatty acids, alternatively from 0.1% to 2%.

Contacting methanol with dried product streams or triglyceride-rich phases and separation of the resulting phases typically is done in conventional liquid-liquid extraction equipment, e.g., a mixer-settler or a liquid-liquid extraction column.

In some embodiments of the invention in which multiple reactors are used, the dried product stream from each reactor is contacted with methanol. In some embodiments, the methanol-rich phase from each reactor is recycled back to the same reactor. In some embodiments, the methanol-rich phase from the last reactor is recycled to an earlier reactor. In some embodiments, methanol and water are not separated from the product stream from the last reactor, but instead a methanol-rich phase of the product stream is recycled and contacted with the dried product stream from an earlier reactor. In such cases, preferably the triglyceride-rich phase from the last reactor is contacted with methanol and the methanol-rich phase from this extraction is recycled to the last reactor.

Suitable heterogeneous esterification catalysts include, e.g., acidic ion exchange resins (e.g., a strong cation exchange resin in the hydrogen form), zeolite in the acid form, Lewis acids, heterogeneous tin-containing catalysts and combinations thereof. The catalyst used in each reactor may be the same or different.

In some embodiments of the invention, the heterogeneous esterification catalyst is a gel-type acidic ion exchange resin having 0.5% to 2.75% crosslinker. In these embodiments, the resin is not a macroreticular resin, which is a resin having a surface area from 25 m²/g to 200 m²/g and an average pore diameter from 50 Å to 500 Å; alternatively a surface area from 30 m²/g to 80 m²/g and an average pore diameter from 100 Å to 300 Å. Suitable gel-type resins include, e.g., acrylic resins, styrenic resins, and combinations thereof. Resins contain polymerized units of a multiethylenically unsaturated monomer (crosslinker). Preferably, the level of crosslinker in the resin is no more than 2.5%, alternatively no more than 2.25%, alternatively no more than 2%, alternatively no more than 1.75%. In some embodiments, the level of crosslinker is at least 0.75%, alternatively at least 1%, alternatively at least 1.25%. Preferably, the average particle size of the gel resin is from 100 µm to 2000 µm, more preferably from 200 µm to 800 µm. In some embodiments of the invention, the ion exchange resin comprises polymerized units of styrene and a crosslinker, e.g., divinyl aromatics; di-, tri- and tetra-(meth)acrylates or (meth)acrylamides; di-, tri- and tetra-allyl ethers and esters; polyallyl and polyvinyl ethers of glycols and polyols. In some embodiments of the invention, the crosslinker is diethylenically unsaturated, e.g., divinylbenzene (DVB). In some embodiments of the invention, the acid functionality of the ion exchange resin comprises sulfonic acid groups, carboxylic acid groups, phosphoric acid groups or a mixture thereof. A typical acidic ion exchange resin has from 0.4 to 8 meq/g acid functionality, on a dry basis, alternatively at least 2 meq/g, alternatively at least 4 meq/g. Preferably, the acid functionality is in the form of sulfonic acid groups.

### Example

To simulate a single-stage reactor product resulting from 95% conversion of 10 wt% free fatty acid in 90 wt% triglyceride, 100 parts (by weight) canola oil, 0.55 parts free fatty acid (oleic acid), 11 parts fatty acid methyl ester (methyl oleate) were mixed. No water was included to simulate prior evaporation of product water. Then 50 parts methanol were added to this mixture. After shaking and settling, liquid samples were taken and analyzed by gas chromatography of the resultant methanol-rich (top) and oil-rich (bottom) phases. The ratio of free fatty acid in the methanol-rich phase to the free fatty acid in the oil-rich phase was 1.3/0.6, or 2.2, while the corresponding ratio of fatty acid methyl ester was 0.1/7.0, or 0.01. Therefore, extraction of a dried product stream with methanol will remove undesired free fatty acid and recycling it will contribute to production of the desired fatty acid methyl ester, and this can be done without removing significant amounts of free fatty acid methyl ester from the product stream. This result could not have been predicted at the outset. For any particular triglyceride containing free fatty acids, the usefulness of the present method may be determined easily in this way.

| | Glycerides, wt% | free fatty acid, wt% | fatty acid methyl ester, wt% |
|---|---|---|---|
| Methanol-Rich Phase (Top) | 0 | 1.3 | 0.1 |
| Oil-Rich Phase (Bottom) | 82.8 | 0.6 | 7.0 |

## Claims

1. A method for esterification of free fatty acids in triglycerides with methanol; said method comprising steps of:
(a) contacting a heterogeneous esterification catalyst in a reactor with a reaction mixture comprising: (i) methanol and (ii) a triglyceride mixture comprising 70-99.8 wt % triglycerides and 0.2-30 wt % free fatty acids, under conditions suitable for esterification, to produce a product stream;
(b) separating water and methanol from the product stream to produce a dried product stream;
(c) contacting the dried product stream with methanol to produce a methanol-rich phase and a triglyceride-rich phase; and
(d) separating the methanol-rich phase and recycling it to the reactor.

2. The method of claim 1 in which the triglyceride mixture comprises 80% to 99.5% triglyceride and from 0.5 wt % to 20 wt % free fatty acids.

3. The method of claim 2 in which water content of the product stream is reduced by at least 70 wt %.

4. The method of claim 3 in which the triglyceride-rich phase is contacted with a heterogeneous esterification catalyst in a second reactor, under conditions suitable for esterification, to produce a second product stream.

5. The method of claim 4 in which the dried first product stream is contacted with an amount of methanol from 3 wt % to 40 wt % of a total of the dried product stream and methanol.

6. The method of claim 5 comprising additional steps of:
(e) separating water and methanol from the second product stream to produce a dried second product stream;
(f) contacting the dried second product stream with methanol to produce a second methanol-rich phase and a second triglyceride-rich phase; and
(g) separating the second methanol-rich phase and recycling it to the second reactor.

7. A method for esterification of free fatty acids in triglycerides with methanol; said method comprising steps of:
(a) contacting a heterogeneous esterification catalyst in a first reactor with a reaction mixture comprising: (i) methanol and (ii) a triglyceride mixture comprising 70-99.8 wt % triglycerides and 0.2-30 wt % free fatty acids, under conditions suitable for esterification, to produce a first product stream;
(b) separating water and methanol from the first product stream to produce a dried first product stream;
(c) contacting the dried first product stream with a recycled mixture from step (f) comprising methanol to produce a first methanol-rich phase and a first triglyceride-rich phase;
(d) separating the first methanol-rich phase and recycling it to the first reactor;
(e) contacting the first triglyceride-rich phase with a heterogeneous esterification catalyst in a second reactor, under conditions suitable for esterification, to produce a second product stream; and
(f) separating the second product stream into a phase comprising methanol and a second triglyceride-rich phase, and recycling the phase comprising methanol to step (c).

8. The method of claim 7 in which the final triglyceride phase is contacted with an alcohol in a third reactor under conditions suitable for transesterification.

9. The method of claim 8 in which the triglyceride mixture comprises 80% to 99.5% triglyceride and from 0.5 wt % to 20 wt % free fatty acids.

10. The method of claim 9 further comprising steps of:
(g) contacting the second triglyceride-rich phase with methanol to produce a second methanol-rich phase and a final triglyceride phase; and
(h) separating the second methanol-rich phase and recycling it to the second reactor.
